# EUROPEAN PATENT SPECIFICATION

(11) **EP 1 741 588 B1**
(45) Date of publication and mention of the grant of the patent: **17.11.2010**
(21) Application number: 05106268.5
(22) Date of filing: 08.07.2005
(51) Int. Cl.: B60J 7/043, B60J 7/02

(54) **Open roof construction for a vehicle**
Öffnungsfähige Dachkonstruktion für ein Fahrzeug
Construction de toit ouvrant pour un véhicule

(43) Date of publication of application: 10.01.2007
(73) Proprietor: Inalfa Roof Systems Group B.V., 5804 AH Venray (NL)
(72) Inventor: Manders, Peter Christiaan Leonardus Johannes, 5961 SM, Horst (NL); Nellen, Marcel Johan Christiaan, 5803 HL, Venray (NL); Snellenberg, Ronny Marinus Jacobus, 5708 DN, Helmond (NL)
(74) Representative: Voncken, Bartholomeus Maria Ch.

(56) References cited:
- EP-A- 0 638 452
- EP-A- 0 863 817
- DE-C1- 19 713 347
- DE-C1- 19 713 348

## Description

The invention relates to an open roof construction for a vehicle, comprising a roof opening defined in a stationary roof part of the vehicle and a panel which is movable between a closed position in which it closes the roof opening and an open position in which it gives the roof opening free and is positioned at least partially above an adjoining roof part, wherein a first device is provided for moving the rear edge of the panel towards a raised position relative to the closed position and above the adjoining roof part, and wherein further a guide mechanism is provided for guiding the panel towards the open position when the rear edge thereof is in the raised position comprising a tilting lever which is pivotally connected to the panel near to the rear edge thereof and which in such a manner is movably connected to an operating slide which is movable in a substantially longitudinal direction in parallel to the roof, that starting in the closed position of the panel, a movement of the operating slide in a rearward direction firstly initiates a rotation of the tilting lever towards an extended position, as a result of which the rear edge of the panel is raised, and secondly initiates a translational movement of the tilting lever in its extended position as a result of which the panel is moved rearwards towards its open position above the adjoining roof part.

Such an open roof construction for a vehicle (also referred to as "topslider-mechanism") already is known from, among others, EP-A-0638452and DE-C-19713348

In accordance with this state of the art the tilting lever not only functions as a means for raising the rear edge of the panel, but it also will operate as a support means for defining the correct translational movement of the panel rearwards towards its open position above the adjoining roof part. This avoids the need for complicated operating and drive mechanisms comprising a number of separate parts which each are responsible for part of the movement of the panel.

It is an object of the present invention to provide an alternative open roof construction of the type referred to above, in which such problems are avoided in an effective manner

Thus, in accordance with the present invention, an open roof construction of the type referred to above is characterized in that the movable connection between the tilting lever and the operating slide is defined by two guide curve-guide pin assemblies, and said guide assemblies remain operable during the entire movement of the panel between its closed and open positions. The provision of guide curve-guide pin assemblies allows the realisation of the desired motion of the tilting lever with simple, however, reliable means.

Such guide curve-guide pin assemblies may be realised in many ways. For example, both guide curves may be provided in the operating slide, whereas both guide pins may be part of the tilting lever. However, also the opposite situation may occur, in which both guide curves are part of the operating slide and both guide pins are provided on the tilting lever (both solutions are mechanically equivalent). Also a mixed solution would be conceivable, i.e. one guide curve and one guide pin belonging to the operating slide, and the other guide curve and other guide pin belonging to the tilting lever.

Whatever solution is selected for the position of the guide curves and guide pins, the position of the guide pins and position and shape of the guide curves should be selected in such a manner, that the appropriate movement of the tilting lever is obtained.

When the first solution is adopted (guide curves in the operating slide and guide pins part of the tilting lever), according to a preferred embodiment the tilting lever then comprises a first guide pin at its end remote from the end pivotally connected to the panel, which first guide pin cooperates with a first guide curve in the operating slide which extends substantially in parallel to the direction of movement of the operating slide, and wherein the second guide pin of the tilting lever is positioned between both ends of the tilting lever and cooperates with a second guide curve which substantially extends inclined relative to said direction of movement of the operating slide.

The cooperation between the first guide curve and first guide pin allows an initial movement of the operating slide without a corresponding movement of the tilting lever in the same direction (rearwards). Simultaneously, however, the cooperation between the second guide pin and second guide curve will lead to the desired initial rotation of the tilting lever towards its extended position. Generally, when the tilting lever has reached its extreme extended position (in which the second guide pin has reached the corresponding end of the second guide curve) the first guide pin also will have reached the corresponding end of the first guide curve.

Further it is advantageous, when the outer ends of the second guide curve extend substantially in parallel to said direction of movement of the operating slide. Such outer ends are helpful in stabilising the position of the tilting lever in its non-extended position as well as its fully extended position.

To further enhance the stable positioning of the tilting lever in its non-extended position (and, thus, safely locking the panel in its closed position) it is preferred, that the operating slide and tilting lever are provided with cooperating locking means for locking the tilting lever in its non-extended position when the panel is in its closed position. Such cooperating locking means, for example could comprise cooperating protrusions and recesses provided on both parts.

In yet a further preferred embodiment of the open roof construction in accordance with the present invention, the forward edge of the panel is provided with a slide shoe cooperating with a guide extending in a substantially longitudinal direction in parallel to the roof and comprising a forward guide end extending inclined downwardly for receiving the slide shoe in the closed position of the panel, and wherein further an auxiliary operating slide is provided which is movable in a substantially longitudinal direction in parallel to the roof and which cooperates with the panel in such a manner that, starting in the closed position of the panel, a movement of the auxiliary operating slide in a rearward direction will raise the forward edge such, that the slide shoe leaves the downwardly inclined forward guide end.

When the panel is in its closed position and the slide shoe is positioned in the forward guide end, a movement of the panel in a rearward direction only can start, when the slide shoe is moved out of the forward guide end. Moving (or raising) the slide shoe out of the forward guide end will occur by means of a movement of the auxiliary operating slide in a rearward direction, such that the forward edge of the panel (and therefore, the slide shoe) will be raised. As long as the slide shoe has not completely left the said forward guide end, the panel will not, or hardly, move rearward, such that during an operation of the operating slide the tilting lever will be rotated towards its extended position. When the tilting lever has reached its extended position, the auxiliary operating slide will have raised the forward edge of the panel (and, thus, the slide shoe) sufficiently to allow a movement of the panel in a rearward direction, as supported by the extended tilting lever.

In such a case, it is possible that the panel and the auxiliary operating slide are provided with a cooperating guide pin and guide curve. As stated above, many constructional solutions are possible, such as providing a guide pin as a part of the panel, and providing the guide curve in the auxiliary slide. Again, as stated above, also mechanical equivalent solutions are conceivable.

Preferably, the operating slide and auxiliary operating slide cooperate with a common guide, such that the number of parts of the open roof construction is limited.

Moreover, it is preferred that the operating slide and auxiliary slide are connected to each other at a fixed spacing. Basically this means, that the operating slide and auxiliary slide move in unison, such that the motions of the forward edge and rearward edge of the panel are interrelated in a very specific manner.

By means of the rotation of the tilting lever the rearward edge of the panel is raised. To further increase the height to which the rearward edge of the panel is raised, a special embodiment is mentioned, in which means are provided for rotating the operating slide around a transverse axis when the tilting lever is at least partially in its extended position. For example, such means for rotating the operating slide may comprise a cooperating guide curve and guide pin of the operating slide and stationary roof part.

Hereinafter an embodiment of the open roof construction in accordance with the present invention will be elucidated while referring to the drawing.
Figure 1 shows in a schematical and perspective view part of a vehicle with an embodiment of the open roof construction in a closed position;
figure 2 shows the open roof construction of figure 1 in a open position;
figures 3-5 show different stages of the operation of the inventive open roof construction, and
figure 6 shows, schematically, a detail of a rotating operating slide.

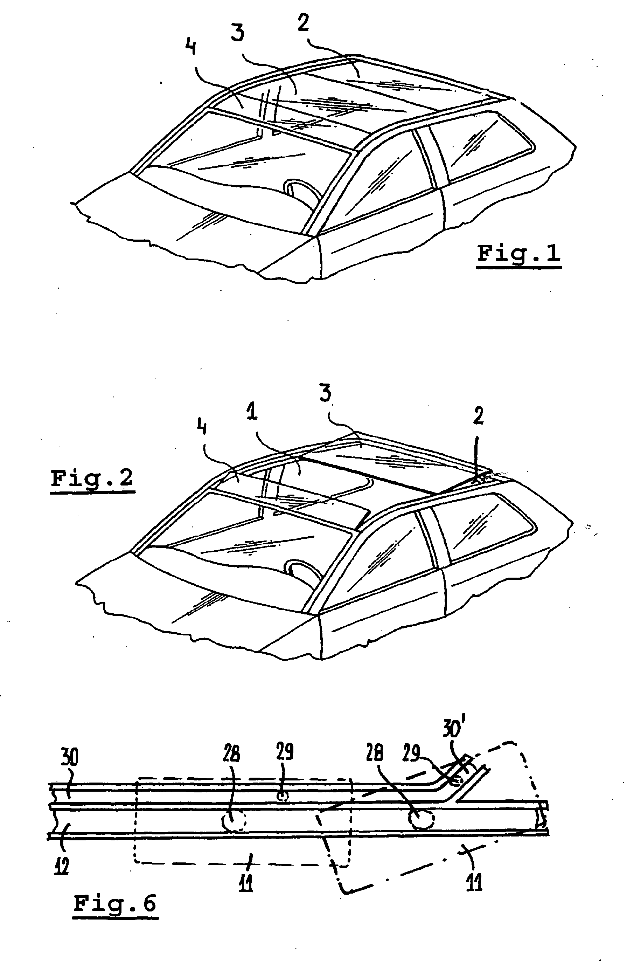

Figure 1 shows part of a vehicle which comprises a roof opening 1 (figure 2) defined in a stationary roof part 2. A panel 3 is movable between a closed position (figure 1) in which its closes the roof opening 1, and an open position (figure 2) in which it gives the roof opening 1 free and is positioned at least partially above the adjoining stationary roof part 2.

As is know per se, such an open roof construction (which is also known as topslider-mechanism) could comprise additional elements, such as for example a tiltable wind deflector 4 positioned ahead of the roof opening 1 (in figure 1 shown in a retracted position and in figure 2 shown in an extended position).

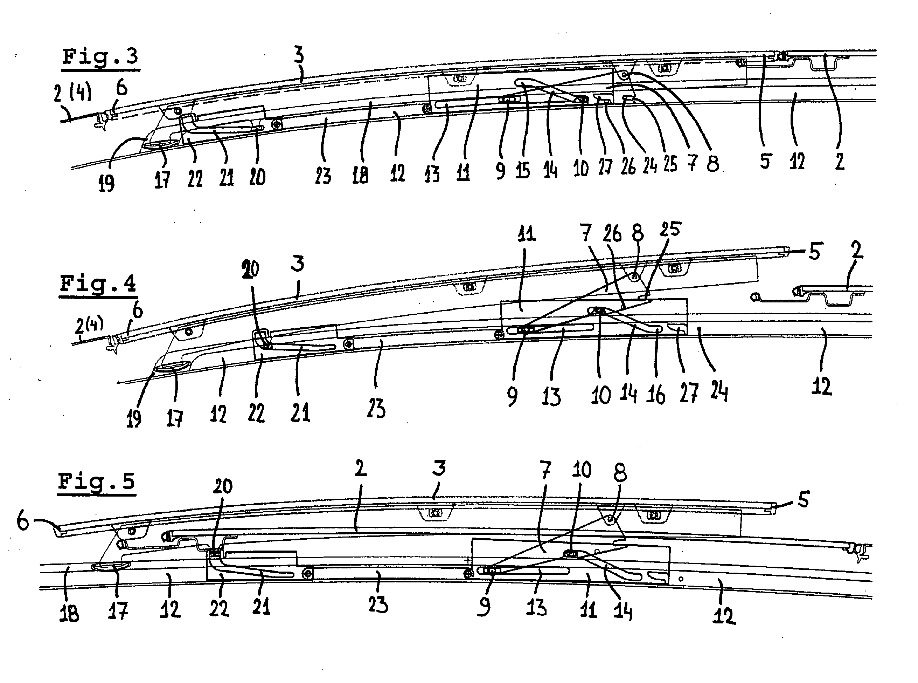

The movement of the panel 3 from a closed position as illustrated in figure 1 towards an open position as illustrated in figure 2 is governed by a mechanism which has been represented schematically in figures 3-5 in successive operational stages. It is noted, that figures 3-5 represent one longitudinal side of the open roof construction (i.e. one longitudinal side of the panel 3), and it should be understood that a corresponding mechanism generally will be provided at the opposite longitudinal side.

Figure 3 shows the panel 3 in a closed position in which both its rearward edge 5 and forward edge 6 sealingly engage stationary roof parts 2 (or, at the forward edge 6, a winddeflector 4, if provided). A tilting lever 7 is pivotally connected to the panel 3 at a pivot 8 which is not far from the rearward edge 5 of the panel 3. This tilting lever 7 is provided with a first guide pin 9 at its end remote from the end of the tilting lever 7 connected to the pivot 8, and a second guide pin 10 positioned between both ends of the tilting lever 7.

An operating slide 11 is movable in a substantially longitudinal direction in parallel to the roof, for example in a guide 12. In a manner known per se the movement of the operating slide 11 may be realised by a push-pull cable arrangement (not illustrated here).

The operating slide 11 is provided with a first guide curve 13 which extends substantially in parallel to the direction of movement of the operating slide 11 (thus, in the present case, in parallel to the guide 12). Further, the operating slide 11 comprises a second guide curve 14 which substantially extends inclined relative to said direction of movement of the operating slide 11.

As can be seen clearly in figures 3 and 4, respectively, the second guide curve 14 is provided with short outer ends 15 and 16, respectively, which again extend substantially in parallel to said direction of movement of the operating slide 11.

Near to its forward edge 6 the panel 3 is provided with a slide shoe 17 which is meant for cooperation with a guide 18. This guide 18 comprises a forward guide end 19 which extends inclined downwardly and which receives the slide shoe 17 when the panel is in a position in which the forward edge 6 thereof abuts the adjoining stationary roof part 2 (or winddeflector 4).

Near to its forward edge 6, panel 3 further is provided with a guide pin 20 which is housed in a guide curve 21 of a auxiliary operating slide 22. In the present embodiment, auxiliary operating slide 22 can move in the same guide 12 as does the operating slide 11. Further, there is a mechanical connection 23 between the operating slide 11 and auxiliary operating slide 22, such that both slides will move in unison.

Finally, specifically referring to figure 4, a locking pin 24 is provided which (in a manner not shown in detail here) is connected to, and moves together with, the operating slide 11 and which will engage in a recess 25 of the tilting lever 7 when the open roof construction is in the closed position as illustrated in figure 3. The tilting lever 7 also is provided with a locking pin 26 (see, for example, figure 4) which, again in the closed position of the open roof construction, engages behind a projection 27 of the operating slide 11.

The open roof construction in accordance with the present invention functions as follows.

In the closed position illustrated in figure 3 the cooperation between locking pin 24 and recess 25 and between locking pin 26 and projection 27, respectively, maintains the rearward edge 5 of the panel 3 in a lowered position, in which the open roof construction is closed (thus, the roof opening 1 is closed). In this position the second guide pin 10 of the tilting lever 7 is positioned in the outer end 16 of the second guide curve 14. The tilting lever 7 is in a non-extended or retracted position. The rearward edge 5 of the panel 3 will sealingly engage the adjoining stationary roof part 2.

Also, in this position, slide shoe 17 is housed in the forward guide end 19, such that forward edge 6 of the panel 3 will sealingly engage the adjoining stationary roof part 2. Guide pin 20 of the panel 3 is positioned at one extreme end of the guide curve 21 of the auxiliary operating slide 22..

For opening the roof opening 1 (i.e. moving the panel 3) the assembly of operating slide 11 and auxiliary operating slide 22 is moved in a rearward direction (to the right in the figures). Because slide shoe 17 is still positioned in the forward guide end 19 which basically extends vertically, such a rearward movement of the operating slides will not immediately lead to a corresponding rearward motion of the panel 3. Instead, as illustrated in figure 4, operating slide 11 will move relative to the tilting lever 7, such that the first guide pin 9 slides in the first guide curve 13 and second guide pin 10 slides in the second guide curve 14 as a result of which the lever 7 will rotate around pivot 8 towards a position as illustrated in figure 4. This position defines a so-called ventilating position of the panel 3, in which, mainly, only its rearward edge 5 has been raised.

It is noted, however, that during this initial rearward movement of the operating slide 11, also the auxiliary operating slide 22 has started to move rearwardly, such that, due to the inclined orientation of its guide curve 21, the guide pin 20 of the panel 3 is somewhat lifted. As a result, the slide shoe 17 has already started to move out of the forward guide end 19 of the guide 18.

During a further movement of the operating slide 11 and auxiliary operating slide 22 in a rearward direction, the slide shoe 17 will be lifted completely out of the forward guide end 19 and will enter the substantially horizontal part of the guide 18. This means, that also the forward edge 6 of the panel 3 has assumed a somewhat lifted position. Because, meanwhile, the tilting lever 7 has been rotated to assume its fully extended position, in which the rearward edge 5 of the panel is raised above the adjoining stationary roof part 2, a further movement of the assembly of operating slide 11 and auxiliary operation slide 22 now may be used to slide the entire panel 3 above the adjoining stationary roof part 2 to a position as illustrated in figure 5.

It is noted, that during the first stage of the described movement the locking pin 24 will disengage the recess 25 and locking pin 26 will disengage the projection 27, such that a rotation of the tilting lever 7 is no longer impeded.

From the above description it follows, that the tilting lever 7 firstly will rotate for raising the rearward edge 5 of the panel (from the position illustrated in figure 3 towards the position illustrated in figure 4) and then will experience a translational movement (from the position illustrated in figure 4 towards the position illustrated in figure 5) in its extended position for positioning the raised panel 3 above the adjoining stationary roof part 2.

Finally, reference is made to figure 6, which shows schematically an operating slide 11 which, by means of a slide shoe 28 cooperates with its assigned guide 12. An auxiliary slide shoe 29 cooperates with an auxiliary guide 30, such that at a diversion 30' of the auxiliary guide a rotation of the operating slide 11 is caused, which enhances the lifting effect of a tilting lever connected to the operating slide 11 (not illustrated here). In such an embodiment, therefore, the rearward edge 5 of the panel 3 can be raised to a higher altitude.

The invention is not limited to the embodiments described before, which may be varied widely within the scope of the invention as defined by the appending claims.

## Claims

1. Open roof construction for a vehicle, comprising a roof opening (1) defined in a stationary roof part (2) of the vehicle and a panel (3) which is movable between a closed position in which it closes the roof opening and an open position in which it gives the roof opening free and is positioned at least partially above an adjoining roof part, wherein a first device is provided for moving the rear edge (5) of the panel towards a raised position relative to the closed position and above the adjoining roof part (2), and wherein further a guide mechanism is provided for guiding the panel towards the open position when the rear edge thereof is in the raised position, comprising
a tilting lever (7) which is pivotally connected to the panel (3) near to the rear edge (5) thereof and which in such a manner is movably connected to an operating slide (11) which is movable in a substantially longitudinal direction in parallel to the roof, that starting in the closed position of the panel, a movement of the operating slide (11) in a rearward direction firstly initiates a rotation of the tilting lever (7) towards an extended position, as a result of which the rear edge (5) of the panel (3) is raised, and secondly initiates a translational movement of the tilting lever in its extended position as a result of which the panel is moved rearwards towards its open position above the adjoining roof part, **characterized in that** the movable connection between the tilting lever (7) and the operating slide (11) is defined by two guide curve-guide pin assemblies (13, 9 ; 14, 10) wherein a cooperation between a first guide curve (13) and first guide pin (9) allows an initial movement of said operating slide (11) and simultaneosly a cooperation between a second guide pin (10) and a second guide curve (14) leads to an initial rotation of said tilting lever, and said guide assemblies remain operable during the entire movement of the panel between its closed and open positions.

2. Open roof construction according to claim 1, wherein both guide curves (13, 14) are provided in the operating slide (11) and both guide pins (9, 10) are part of the tilting lever (7).

3. Open roof construction according to claim 2, wherein the tilting lever (7) comprises a first guide pin (9) at its end remote from the end pivotally connected to the panel (3), which first guide pin cooperates with a first guide curve (13) in the operating slide (11) which extends substantially in parallel to the direction of movement of the operating slide, and wherein the second guide pin (10) of the tilting lever (7) is positioned between both ends of the tilting lever and cooperates with a second guide curve (14) which substantially extends inclined relative to said direction of movement of the operating slide.

4. Open roof construction according to claim 3, wherein the outer ends (15, 16) of the second guide curve (14) extend substantially in parallel to said direction of movement of the operating slide (11).

5. Open roof construction according to any of the previous claims, wherein the operating slide (11) and tilting lever (7) are provided with cooperating locking means (24, 25) for locking the tilting lever in its non-extended position when the panel is in its closed position.

6. Open roof construction according to any of the previous claims, wherein the forward edge (6) of the panel (3) is provided with a slide shoe (17) cooperating with a guide (18) extending in a substantially longitudinal direction in parallel to the roof and comprising a forward guide end (19) extending inclined downwardly for receiving the slide shoe in the closed position of the panel, and wherein further an auxiliary operating slide (22) is provided which is movable in a substantially longitudinal direction in parallel to the roof and which cooperates with the panel in such a manner that, starting in the closed position of the panel, a movement of the auxiliary operating slide (22) in a rearward direction will raise the forward edge (6) such, that the slide shoe (17) leaves the downwardly inclined forward guide end (19).

7. Open roof construction according to claim 6, wherein the panel (3) and the auxiliary operating slide (22) are provided with a cooperating guide pin (20) and guide curve (21).

8. Open roof construction according to claim 7, wherein the guide pin (20) is part of the panel (3), whereas the guide curve (21) is provided in the auxiliary slide (22).

9. Open roof construction according to one of the claims 6-8, wherein the operating slide (11) and auxiliary operating slide (22) cooperate with a common guide.

10. Open roof construction according to claim 9, wherein the operating slide (11) and auxiliary slide (22) are connected to each other at a fixed spacing.

11. Open roof construction according to any of the previous claims, wherein means are provided for rotating the operating slide (11) around a transverse axis when the tilting lever (7) is at least partially in its extended position.

12. Open roof construction according to claim 11, wherein the means for rotating the operating slide (11) comprise a cooperating guide curve (30) and guide pin (29) of the operating slide and stationary roof part.

## Patentansprüche

1. Offendachkonstruktion für ein Fahrzeug, aufweisend eine in einem stationären Dachteil (2) des Fahrzeugs definierte Dachöffnung (1) und ein Paneel (3), das zwischen einer Schließposition, in welcher es die Dachöffnung verschließt, und einer Offenposition, in welcher es die Dachöffnung freigibt, bewegbar ist und zumindest teilweise über einem angrenzenden Dachteil positioniert ist, wobei eine erste Vorrichtung vorgesehen ist zum Bewegen des hinteren Randes (5) des Paneels in Richtung zu einer relativ zu der Schließposition erhöhten Position und über den angrenzenden Dachteil (2), und wobei ferner ein Führungsmechanismus vorgesehen ist, um das Paneel in Richtung zu der Offenposition zu führen, wenn der hintere Rand davon in der erhöhten Position ist, aufweisend:
einen Kipphebel (7), der schwenkbar an das Paneel (3) nahe bei dem hinteren Rand (5) davon angeschlossen ist und der derart bewegbar an einen in einer im Wesentlichen längsverlaufenden Richtung parallel zu dem Dach bewegbaren Betätigungsschlitten (11) angeschlossen ist, dass beim Starten in der Schließposition des Paneels eine Bewegung des Betätigungsschlittens (11) in einer Rückwärtsrichtung zuerst ein Drehen des Kipphebels (7) in Richtung zu einer Ausstreckposition initiiert, wobei als Folge hiervon der hintere Rand (5) des Paneels (3) angehoben wird, und zweitens eine Translationsbewegung des Kipphebels in seine Ausstreckposition initiiert, wobei als Folge davon das Paneel nach hinten in Richtung zu seiner Offenposition über dem benachbarten Dachteil bewegt wird, **dadurch gekennzeichnet, dass**
der bewegbare Anschluss zwischen dem Kipphebel (7) und dem Betätigungsschlitten (11) durch zwei Führungskurven-Führungsstift-Anordnungen (13, 9; 14, 10) definiert ist, wobei ein Zusammenwirken zwischen einer ersten Führungskurve (13) und einem ersten Führungsstift (9) eine anfängliche Bewegung des Betätigungsschlittens (11) zulässt und gleichzeitig ein Zusammenwirken zwischen einem zweiten Führungsstift (10) und einer zweiten Führungskurve (14) zu einem anfänglichen Drehen des Kipphebels führt, und die Führungsanordnungen während der gesamten Bewegung des Paneels zwischen dessen Schließposition und seiner Offenposition betätigbar bleiben.

2. Offendachkonstruktion gemäß Anspruch 1, wobei beide Führungskurve (13, 14) in dem Betätigungsschlitten (11) vorgesehen sind und beide Führungsstifte (9, 10) Teil des Kipphebels (7) sind.

3. Offendachkonstruktion gemäß Anspruch 2, wobei der Kipphebel (7) an seinem Ende, das von dem schwenkbar an das Paneel (3) angeschlossenen Ende entfernt ist, einen ersten Führungsstift (9) aufweist, wobei der erste Führungsstift mit einer ersten Führungskurve (13) in dem Betätigungsschlitten (11) zusammenwirkt, die sich im Wesentlichen parallel zu der Bewegungsrichtung des Betätigungsschlittens erstreckt, und wobei der zweite Führungsstift (10) des Kipphebels (7) zwischen beiden Enden des Kipphebels positioniert ist und mit einer zweiten Führungskurve (14) zusammenwirkt, die sich relativ zu der Bewegungsrichtung des Betätigungsschlittens im Wesentlichen schräg erstreckt.

4. Offendachkonstruktion gemäß Anspruch 3, wobei sich die äußeren Enden (15, 16) der zweiten Führungskurve (14) im Wesentlichen parallel zu der Bewegungsrichtung des Betätigungsschlittens (11) erstrecken.

5. Offendachkonstruktion gemäß einem der vorhergehenden Ansprüche, wobei der Betätigungsschlitten (11) und der Kipphebel (7) mit zusammenwirkenden Verriegelungsmitteln (24, 25) zum Verriegeln des Kipphebels in seiner Nicht-Erstreckungsposition, wenn das Paneel in seiner Schließposition ist, versehen sind.

6. Offendachkonstruktion gemäß einem der vorhergehenden Ansprüche, wobei der vordere Rand (6) des Paneels (3) mit einem Gleitschuh (17) versehen ist, der mit einer Führung (18) zusammenwirkt, die sich in einer im Wesentlichen längsverlaufenden Richtung parallel zu dem Dach erstreckt und ein vorderes Führungsende (19) aufweist, das sich schräg nach unten erstreckt, um den Gleitschuh in der Schließposition des Paneels aufzunehmen, und wobei ferner ein Hilfsbetätigungsschlitten (22) vorgesehen ist, der in einer im Wesentlichen längsverlaufenden Richtung parallel zu dem Dach bewegbar ist und mit dem Paneel derart zusammenwirkt, dass beim Starten in der Schließposition des Paneels eine Bewegung des Hilfsbetätigungsschlittens (22) in Rückwärtsrichtung den vorderen Rand (6) anhebt, so dass der Gleitschuh (17) das nach unten geneigte vordere Führungsende (19) verlässt.

7. Offendachkonstruktion gemäß Anspruch 6, wobei das Paneel (3) und der Hilfsbetätigungsschlitten (22) mit einem Führungsstift (20) und einer Führungskurve (21), die zusammenwirken, versehen sind.

8. Offendachkonstruktion gemäß Anspruch 7, wobei der Führungsstift (20) Teil des Paneels (3) ist, wohingegen die Führungskurve (21) in dem Hilfsschlitten (22) vorgesehen ist.

9. Offendachkonstruktion gemäß einem der Ansprüche 6 bis 8, wobei der Betätigungsschlitten (11) und der Hilfsbetätigungsschlitten (22) mit einer gemeinsamen Führung (22) zusammenwirken.

10. Offendachkonstruktion gemäß Anspruch 9, wobei der Betätigungsschlitten (11) und der Hilfsschlitten (22) mit einem festen Abstand aneinander angeschlossen sind.

11. Offendachkonstruktion gemäß einem der vorhergehenden Ansprüche, wobei Mittel vorgesehen sind zum Drehen des Betätigungsschlittens (11) um eine Querachse, wenn der Kipphebel (7) zumindest teilweise in seiner Ausstreckposition ist.

12. Offendachkonstruktion gemäß Anspruch 11, wobei die Mittel zum Drehen des Betätigungsschlittens (11) eine Führungskurve (30) und einen Führungsstift (29) für den Betätigungsschlitten und den stationären Dachteil aufweisen, die zusammenwirken.

## Revendications

1. Structure de toit ouvrant pour un véhicule, comprenant une ouverture (1) définie dans une partie fixe (2) du toit du véhicule et un panneau (3) qui est mobile entre une position fermée, dans laquelle il occulte l'ouverture du toit, et une position ouverte dans laquelle il dégage l'ouverture du toit et se trouve, au moins partiellement, au-dessus d'une partie attenante dudit toit, un premier dispositif étant prévu pour mouvoir le bord postérieur (5) du panneau vers une position relevée par rapport à la position fermée, et sus-jacente à la partie attenante (2) du toit, et un mécanisme de guidage étant en outre prévu pour guider le panneau vers la position ouverte lorsque le bord postérieur de ce dernier occupe la position relevée, comprenant
un levier basculant (7) qui est relié au panneau (3) de manière pivotante à proximité du bord postérieur (5) de celui-ci et est relié, avec faculté de mouvement, à une coulisse d'actionnement (11) mobile dans une direction sensiblement longitudinale, parallèlement au toit, de façon telle qu'à partir de la position fermée du panneau, un mouvement rétrograde de la coulisse d'actionnement (11) déclenche, en premier lieu, une rotation du levier basculant (7) vers une position déployée, impliquant ainsi un soulèvement du bord postérieur (5) du panneau (3), et déclenche, en second lieu, un mouvement translatoire du levier basculant vers sa position déployée, le panneau étant ainsi animé d'un mouvement rétrograde vers sa position ouverte sus-jacente à la partie attenante du toit, **caractérisée par le fait que** la liaison mobile, entre le levier basculant (7) et la coulisse d'actionnement (11), est définie par deux ensembles à pistes de guidage-tétons de guidage (13, 9 ; 14, 10), une coopération entre une première piste de guidage (13) et un premier téton de guidage (9) autorisant un mouvement initial de ladite coulisse d'actionnement (11) et une coopération, entre un second téton de guidage (10) et une seconde piste de guidage (14), gouvernant simultanément une rotation initiale dudit levier basculant, et lesdits ensembles de guidage conservant leur faculté de manoeuvre durant l'intégralité du mouvement du panneau entre ses positions fermée et ouverte.

2. Structure de toit ouvrant selon la revendication 1, dans laquelle les deux pistes de guidage (13, 14) sont prévues dans la coulisse d'actionnement (11), et les deux tétons de guidage (9, 10) font partie intégrante du levier basculant (7).

3. Structure de toit ouvrant selon la revendication 2, dans laquelle le levier basculant (7) comprend un premier téton de guidage (9) à son extrémité éloignée de l'extrémité reliée au panneau (3) de manière pivotante, lequel premier téton de guidage coopère avec une première piste de guidage (13) ménagée dans la coulisse d'actionnement (11) et s'étendant, pour l'essentiel, parallèlement à la direction de mouvement de la coulisse d'actionnement ; et dans laquelle le second téton de guidage (10) du levier basculant (7) est interposé entre les deux extrémités du levier basculant et coopère avec une seconde piste de guidage (14) offrant un tracé sensiblement incliné vis-à-vis de ladite direction de mouvement de la coulisse d'actionnement.

4. Structure de toit ouvrant selon la revendication 3, dans laquelle les extrémités extérieures (15, 16) de la seconde piste de guidage (14) s'étendent, pour l'essentiel, parallèlement à ladite direction de mouvement de la coulisse d'actionnement (11).

5. Structure de toit ouvrant selon l'une quelconque des revendications précédentes, dans laquelle la coulisse d'actionnement (11) et le levier basculant (7) sont pourvus de moyens de verrouillage (24, 25) coopérant mutuellement, afin de verrouiller le levier basculant dans sa position non déployée lorsque le panneau occupe sa position fermée.

6. Structure de toit ouvrant selon l'une quelconque des revendications précédentes, dans laquelle le bord antérieur (6) du panneau (3) est muni d'un patin de glissement (17) coopérant avec un guide (18) s'étendant dans une direction sensiblement longitudinale, parallèlement au toit, et comprenant une extrémité antérieure de guidage (19) s'étendant avec inclinaison vers le bas, pour recevoir le patin de glissement dans la position fermée du panneau ; et dans laquelle il est prévu, par ailleurs, une coulisse auxiliaire d'actionnement (22) qui est mobile dans une direction sensiblement longitudinale, parallèlement au toit, et coopère avec le panneau de façon telle qu'à partir de la position fermée du panneau, un mouvement rétrograde de la coulisse auxiliaire d'actionnement (22) soulève le bord antérieur (6) de telle sorte que le patin de glissement (17) quitte l'extrémité antérieure de guidage (19), inclinée vers le bas.

7. Structure de toit ouvrant selon la revendication 6, dans laquelle le panneau (3) et la coulisse auxiliaire d'actionnement (22) sont pourvus d'un téton de guidage (20) et d'une piste de guidage (21) coopérant mutuellement.

8. Structure de toit ouvrant selon la revendication 7, dans laquelle le téton de guidage (20) fait partie intégrante du panneau (3), cependant que la piste de guidage (21) est prévue dans la coulisse auxiliaire (22).

9. Structure de toit ouvrant selon l'une des revendications 6-8, dans laquelle la coulisse d'actionnement (11) et la coulisse auxiliaire d'actionnement (22) coopèrent avec un guide commun.

10. Structure de toit ouvrant selon la revendication 9, dans laquelle la coulisse d'actionnement (11) et la coulisse auxiliaire (22) sont reliées l'une à l'autre avec espacement fixe.

11. Structure de toit ouvrant selon l'une quelconque des revendications précédentes, dans laquelle des moyens sont prévus pour faire tourner la coulisse d'actionnement (11) autour d'un axe transversal lorsque le levier basculant (7) se trouve, au moins partiellement, dans sa position déployée.

12. Structure de toit ouvrant selon la revendication 11, dans laquelle les moyens, conçus pour faire tourner la coulisse d'actionnement (11), comprennent une piste de guidage (30) et un téton de guidage (29) en coopération mutuelle sur la coulisse d'actionnement, et sur la partie fixe du toit.
